(19) Europäisches Patentamt
European Patent Office
Office européen des brevets

(11) **EP 4 546 446 A1**

(12) **EUROPEAN PATENT APPLICATION**
published in accordance with Art. 153(4) EPC

(43) Date of publication:
**30.04.2025 Bulletin 2025/18**

(21) Application number: **23912811.9**

(22) Date of filing: **22.12.2023**

(51) International Patent Classification (IPC):
*H01M 4/134* (2010.01)    *H01M 4/38* (2006.01)
*H01M 4/48* (2010.01)    *H01M 4/587* (2010.01)
*H01M 4/36* (2006.01)    *H01M 4/525* (2010.01)
*H01M 4/505* (2010.01)    *H01M 4/58* (2010.01)
*H01M 4/131* (2010.01)    *H01M 4/133* (2010.01)

(52) Cooperative Patent Classification (CPC):
H01M 4/131; H01M 4/133; H01M 4/134;
H01M 4/136; H01M 4/36; H01M 4/38; H01M 4/48;
H01M 4/505; H01M 4/525; H01M 4/58;
H01M 4/587; Y02E 60/10

(86) International application number:
**PCT/KR2023/021385**

(87) International publication number:
**WO 2024/144136 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 KR 20220186045**

(71) Applicant: **LG Energy Solution, Ltd.
Seoul 07335 (KR)**

(72) Inventors:
• **HONG, Yeon Suk
Daejeon 34122 (KR)**
• **KIM, Eun Bee
Daejeon 34122 (KR)**
• **YOUN, Suk Il
Daejeon 34122 (KR)**

(74) Representative: **Hoffmann Eitle
Patent- und Rechtsanwälte PartmbB
Arabellastraße 30
81925 München (DE)**

(54) **LITHIUM SECONDARY BATTERY**

(57) The present application relates to a lithium secondary battery.

[Figure 1]

EP 4 546 446 A1

**Description**

[Technical Field]

The present application claims priority to and the benefit of Korean Patent Application No. 10-2022-0186045 filed in the Korean Intellectual Property Office on December 26, 2022, the entire contents of which are incorporated herein by reference.

The present application relates to a lithium secondary battery.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming from the positive electrode. As a negative electrode material, carbon-based materials such as graphite are excellent in stability and reversibility, but have a limitation in terms of capacity. Therefore, in fields for the purpose of high capacity, attempts to use Si-based materials with high theoretical capacity as the negative electrode material are increasing.

That is, a lithium secondary battery is usually manufactured by using a lithium-intercalated compound, such as $LiCoO_2$ or $LiMn_2O_4$ for the positive electrode, and a lithium-not-intercalated material, such as a carbon-based or Si-based material for the negative electrode. During charging, the lithium ions intercalated to the positive electrode move to the negative electrode through the electrolyte. During discharging, the lithium ions move back to the positive electrode from the negative electrode. During charging, lithium moving from the positive electrode to the negative electrode reacts with the electrolyte to form a kind of passivation film, that is, a solid electrolyte interface (SEI) on a surface of the negative electrode. The SEI inhibits migration of electrons required for the reaction of the negative electrode with the electrolyte to prevent decomposition of the electrolyte, thereby stabilizing a structure of the negative electrode. On the other hand, formation of the SEI is irreversible to cause consumption of lithium ions. That is, the lithium consumed due to the formation of SEI does not return to the positive electrode during the subsequent discharging process, resulting in a reduction in capacity of the battery.

On the other hand, as an effort for improving the performance of the lithium secondary battery, it is needed to develop a technology for accelerating a charging rate. In order to rapidly charge a lithium secondary battery, a migration rate of lithium ions should be fast during the intercalation process of lithium ions into the negative electrode. Therefore, a battery design is being made to reduce a diffusion distance of lithium by forming a negative electrode active material layer to have a thickness at a level of a thin film, and to achieve high output by reducing internal resistance by forming a carbon-coated layer on a surface of the negative electrode active material layer to increase conductivity.

However, it is difficult to implement a high capacity with a negative electrode having such a thin film negative electrode active material layer. In addition, it is difficult to implement rapid charging in a negative electrode having a high capacity. Further, when using a silicon-based negative electrode, a content of Si in the negative electrode is increased for increase in energy density, and accordingly, in order to reduce the efficiency of the positive electrode of High Ni, which is a positive electrode material, an excessive amount of sacrificial positive electrode material is applied to be in balance with the negative electrode. However, in this case, problems of an increase in amount of gas generation in the battery cell itself and the resulting stability are caused.

Therefore, for lithium secondary batteries that use a silicon-based negative electrode to achieve capacity characteristics, high energy density, and rapid charging performance and use a NCMA-based or NCM-based positive electrode with a high content of nickel as a counter electrode, there is a need for research on not using a section accompanied by a change in volume during charging and discharging for improvement in performance and on an efficiency relationship and an area relationship between the positive electrode and the negative electrode.

Prior Art Document

(Patent Literature 1) Japanese Patent Application Publication No. 2009-080971

[Detailed Description of the Invention]

[Technical Problem]

As a result of research on the aforementioned problems, it could be confirmed that a section accompanied by a rapid change in volume of a silicon-based negative electrode during discharging is not used by using the silicon-based negative electrode to ensure capacity characteristics and rapid charging performance and using an NCM(A)-based active material for a positive electrode, and particularly by adjusting the initial efficiency between the positive electrode and the negative electrode and adjusting differences in area, full width, and full length between the positive electrode and the negative electrode.

Accordingly, the present application relates to a lithium secondary battery in which an area ratio and an initial efficiency of the positive and negative electrodes are adjusted.

[Technical Solution]

An exemplary embodiment of the present specification provides a lithium secondary battery including a positive electrode; a silicon-based negative electrode; a separator provided between the positive electrode and the negative electrode; and an electrolyte, wherein the positive electrode includes a positive electrode current collector layer and a positive electrode active material layer including a positive electrode active material layer composition provided on one surface or both surfaces of the positive electrode current collector layer, wherein the silicon-based negative electrode includes a negative electrode current collector layer and a negative electrode active material layer including a negative electrode active material layer composition provided on one surface or both surfaces of the negative electrode current collector layer, wherein the negative electrode active material layer composition includes a silicon-based active material, and the silicon-based active material includes one or more selected from the group consisting of $SiO_x$ (x=0), $SiO_x$ (0<x<2), SiC, and a Si alloy, wherein an initial efficiency of the silicon-based negative electrode compared to the positive electrode is as high as 0.2% or higher and 4% or less, wherein an area ratio of the positive electrode active material layer and the negative electrode active material layer satisfies a range of 1:1.02 to 1:1.1, and wherein the silicon-based negative electrode exhibits an asymmetrical dimensional difference in which a full width of the silicon-based negative electrode is greater than a full width of the positive electrode by 1 mm or more and a full length of the silicon-based negative electrode is greater than a full length of the positive electrode by 2.5 mm or more.

[Advantageous Effects]

The lithium secondary battery according to the present application can enable a battery with high capacity and high energy density to be ensured by using the silicon-based negative electrode, and can also ensure rapid charging performance by using the silicon-based active material with excellent capacity characteristics to form a negative electrode thickness at a level of a thin film.

In particular, the initial efficiency between the positive electrode and the negative electrode and the differences in area, full width, and full length between the positive electrode and the negative electrode can be adjusted so that a section accompanied by a rapid change in volume of the silicon-based negative electrode during discharging is not used, resulting in cycle improvement in the performance of the lithium secondary battery.

That is, when a silicon-based active material (particularly, pure Si active material) is used, the high capacity characteristics and energy density can be ensured. However, compared to existing carbon-based active materials, cycle performance is deteriorated due to volume expansion of the negative electrode resulting from lithium migration during charging and discharging. However, the lithium secondary battery according to the present application solves the problems by adjusting the aforementioned ratio even when a negative electrode using a silicon-based active material is applied as described above, and thus has a feature of ensuring life performance.

By adjusting the conditions described above, a rapid volume change section of the silicon-based active material is limited to minimize the breakage of pure Si particles, and additional electrolyte solution decomposition is controlled to maintain reversible Li loss and a conductive network between Si active materials to control an amount of isolated lithium, resulting in improvement in cycle performance.

[Brief Description of Drawings]

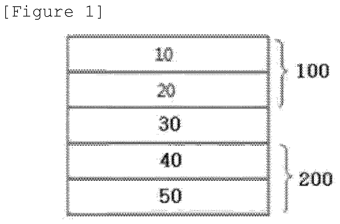

FIG. 1 shows a lithium secondary battery according to the present application.

<Explanation of Reference Numerals and Symbols>

    10: negative electrode current collector layer
    20: negative electrode active material layer
    30: separator
    40: positive electrode active material layer
    50: positive electrode current collector layer
    100: negative electrode
    200: positive electrode

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" means a particle size distribution, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a lithium secondary battery including a positive electrode; a silicon-based negative electrode; a separator provided between the positive electrode and the negative electrode; and an electrolyte, wherein the positive electrode includes a positive electrode current collector layer and a positive electrode active material layer including a positive electrode active material layer composition provided on one surface or both surfaces of the positive electrode current collector layer, wherein the silicon-based negative electrode includes a negative electrode current collector layer and a negative electrode active material layer including a negative electrode active material layer composition provided on one surface or both surfaces of the negative electrode current collector layer, wherein the negative electrode active material layer composition includes a silicon-based active material, and the silicon-based active material includes one or more selected from the group consisting of $SiO_x$ (x=0), $SiO_x$ (0<x<2), SiC, and a Si alloy, wherein an initial efficiency of the silicon-based negative electrode is higher than that of the positive electrode by 0.2% or higher and 4% or less, wherein an area ratio of the positive electrode active material layer and the negative electrode active material layer satisfies a range of 1:1.02 to 1:1.1, and wherein the silicon-based negative electrode exhibits an asymmetrical dimensional difference in which a full width of the silicon-based negative electrode is greater than a full width of the positive electrode by 1 mm or more and a full length of the silicon-based negative electrode is greater than a full length of the positive electrode by 2.5 mm or more.

When a silicon-based active material (particularly, pure Si active material) is used, the high capacity characteristics and energy density can be ensured. However, compared to existing carbon-based active materials, cycle performance is deteriorated due to volume expansion of the negative electrode resulting from lithium migration during charging and discharging. However, the lithium secondary battery according to the present application solves the problems by adjusting the aforementioned ratio even when a negative electrode using a silicon-based active material is applied as described above, and thus has a feature of ensuring life performance.

FIG. 1 is a view showing a stack structure of a lithium secondary battery according to an exemplary embodiment of the present application. Specifically, a negative electrode 100 including a negative electrode active material layer 20 on one surface of a negative electrode current collector layer 10 can be seen, a positive electrode 200 including a positive electrode active material layer 40 on one surface of a positive electrode current collector layer 50 can be seen, and the negative electrode 100 and the positive electrode 200 for a lithium secondary battery are formed in a stack structure with a separator 30 interposed therebetween.

In an exemplary embodiment of the present application, there is provided the lithium secondary battery in which an initial efficiency of the silicon-based negative electrode is higher than that of the positive electrode by 0.2% or higher and 4% or less.

In the present application, a method for measuring the positive electrode initial efficiency is as follows. After manufacturing a lithium coin half-cell with a positive electrode and a counter electrode according to the present application, the lithium coin half-cell is charged at a constant current with a current density of 0.45 mAh/cm$^2$ or less (or 0.2 C or less) to a voltage of 4.3 V, and then the charging is completed when the current density reaches a 1/10 constant current at a constant voltage, which is defined as a 1$^{st}$ charge capacity. After resting for 1 hour, the lithium coin half-cell is again discharged at a constant current with 0.45 mAh/cm$^2$ or less (or 0.2 C or less), and the capacity at the time when reaching 3.0 V is defined as a 1$^{st}$ discharge capacity. In this case, the initial efficiency of the positive electrode is calculated as 1$^{st}$ discharge capacity/1$^{st}$ charge capacity x 100 (%).

In the present application, a method for measuring the negative electrode initial efficiency is as follows. After manufacturing a lithium coin half-cell with a positive electrode and a counter electrode according to the present application, the lithium coin half-cell is discharged at a constant current with a current density of 0.45 mAh/cm$^2$ or less (or 0.2 C or less) to a voltage of 0.005 V, and then the discharging is completed when the current density reaches a 1/20 constant current at a constant voltage, which is defined as a 1$^{st}$ discharge capacity. After resting for 1 hour, the lithium coin half-cell is again charged at a constant current with 0.45 mAh/cm$^2$ or less (or 0.2 C or less), and the capacity at the time when reaching 1.5 V is defined as a 1$^{st}$ charge capacity. In this case, the initial efficiency of the negative electrode is calculated as 1$^{st}$ charge capacity/1$^{st}$ discharge capacity x 100 (%).

In an exemplary embodiment of the present application, there is provided the lithium secondary battery in which an area ratio of the positive electrode active material layer and the negative electrode active material layer satisfies a range of 1:1.02 to 1:1.1, and in which the silicon-based negative electrode exhibits an asymmetrical dimensional difference in which a full width of the silicon-based negative electrode is greater than a full width of the positive electrode by 1 mm or more and a full length of the silicon-based negative electrode is greater than a full length of the positive electrode by 2.5 mm or more.

In an exemplary embodiment of the present application, an area ratio of the positive electrode active material layer and the negative electrode active material layer may satisfy a range of 1:1.02 to 1:1.1, and the silicon-based negative electrode may exhibit an asymmetrical dimensional difference in which the full width of the silicon-based negative electrode is greater than the full width of the positive electrode by 1 mm or more, and preferably 1.5 mm or more and 10 mm or less, and preferably 5 mm or less.

In an exemplary embodiment of the present application, the area ratio of the positive electrode active material layer and the negative electrode active material layer may satisfy a range of 1:1.02 to 1:1.1, and the silicon-based negative electrode may exhibit an asymmetrical dimensional difference in which the full width of the silicon-based negative electrode is greater than the full width of the positive electrode by 2.5 mm or more, or 2.7 mm or more and 15 mm or less, preferably 8 mm or less, and specifically 5 mm or less.

In the present application, there is provided the lithium secondary battery in which the silicon-based negative electrode exhibits an asymmetrical dimensional difference in which the full width of the silicon-based negative electrode is greater than the full width of the positive electrode by 1% or more and the full length of the silicon-based negative electrode is greater than the full length of the positive electrode by 2% or more.

In another exemplary embodiment, there is provided the lithium secondary battery in which the silicon-based negative electrode exhibits an asymmetrical dimensional difference in which the full width of the silicon-based negative electrode is greater than the full width of the positive electrode by 1% or more and 10% or less and the full length of the silicon-based negative electrode is greater than the full length of the positive electrode by 2% or more and 15% or less.

In another exemplary embodiment, the full width of the silicon-based negative electrode may be greater than the full width of the positive electrode by 1% or more and 10% or less, or 1% or more and 8% or less, and the full length of the silicon-based negative electrode may be greater than the full length of the positive electrode by 2% or more and 15% or less, or 2% or more and 10% or less.

When the above range is satisfied, the irreversible capacity of the positive electrode compared to the negative electrode is suitable, so the negative electrode can be used limitedly. Additionally, the cell expression capacity is suitable, so the improvement effect on SOC limited cycle performance is excellent. That is, in a lithium secondary battery, if the area ratio of the positive electrode active material layer and the negative electrode active material layer is below the above range, the irreversible capacity of the positive electrode compared to the negative electrode increases, so there is no effect of using limitedly the negative electrode, and if the area ratio is above the above range, the cell expression capacity is reduced, so the improvement effect on SOC limited cycle performance is not obtained.

In an exemplary embodiment of the present application, the full width may refer to a length in a Machine direction (MD), and the full length may refer to a length in a transverse direction (TD).

Below, the positive electrode, negative electrode, electrolyte, and separator included in the lithium secondary battery will be described, respectively.

According to the present application, the silicon-based negative electrode may include a negative electrode current collector layer, and a negative electrode active material layer including a negative electrode active material layer composition provided on one surface or both surfaces of the negative electrode current collector layer.

The negative electrode current collector layer generally has a thickness of 1 $\mu$m to 100 $\mu$m. Such a negative electrode current collector is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

However, the thickness may be variously modified depending on a type and a use of negative electrode used, and is not limited thereto.

In an exemplary embodiment of the present application, the negative electrode active material layer may include a negative electrode active material layer composition, and the negative electrode active material layer composition may include a silicon-based active material.

In an exemplary embodiment of the present application, the negative electrode active material layer may include a negative electrode active material layer composition, and the negative electrode active material layer composition may include one or more selected from the group consisting of a silicon-based active material, a negative electrode conductive material, and a negative electrode binder.

In an exemplary embodiment of the present application, the negative electrode active material layer may include a negative electrode active material layer composition, and the negative electrode active material layer composition may include a silicon-based active material; a negative electrode conductive material; and a negative electrode binder.

In an exemplary embodiment of the present application, the silicon-based active material may include one or more selected from the group consisting of $SiO_x$ (x=0), $SiO_x$ (0<x<2), SiC, and a Si alloy.

In an exemplary embodiment of the present application, the silicon-based active material may include one or more selected from the group consisting of $SiO_x$ (x=0), $SiO_x$ (0<x<2), and a metal impurity, and may include 70 parts by weight or more of $SiO_x$ (x=0) based on 100 parts by weight of the silicon-based active material.

In another exemplary embodiment, $SiO_x$ (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, based on a total of 100 parts by weight of the silicon-based active material as described above, pure Si particles ($SiO_x$ (x=0)) not bonded to other particles or elements are included within the above range.

Note that an average particle diameter (D50) of the silicon-based active material of the present invention may be 3 $\mu$m to 15 $\mu$m, specifically 4 $\mu$m to 13 $\mu$m, and more specifically 4.5 $\mu$m to 11 $\mu$m. If the average particle diameter is less than 3 $\mu$m, the specific surface area of the particle increases excessively, causing the viscosity of the negative electrode slurry to increase excessively. Accordingly, the particles constituting the negative electrode slurry are not smoothly dispersed. In addition, if the size of the silicon-based active material is excessively small, a contact area between the silicon particles and the conductive material is reduced due to the composite consisting of the conductive material and the binder in the negative electrode slurry, so that a disconnection possibility of the conductive network increases, thereby lowering the capacity retention rate. On the other hand, if the average particle diameter is greater than 10 $\mu$m, excessively large silicon particles are present, so that the surface of the negative electrode is not smooth, causing current density unevenness during charging and discharging. Additionally, if the silicon particles are excessively large, the phase stability of the negative electrode slurry becomes unstable, degrading processability. As a result, the capacity retention rate of the battery decreases.

In an exemplary embodiment of the present application, the silicon-based active material generally has a characteristic BET surface area. The BET surface area of the silicon-based active material is preferably 0.01 $m^2$/g to 150.0 $m^2$/g, more preferably 0.1 $m^2$/g to 100.0 $m^2$/g, particularly preferably 0.2 $m^2$/g to 80.0 $m^2$/g, and most preferably 0.2 $m^2$/g to 18.0 $m^2$/g. The BET surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or fragment-shaped particles. Alternatively, but less preferably, the silicon particles may also have a fiber structure or be present in the form of a silicon-containing film or coating.

In an exemplary embodiment of the present application, the silicon-based active material may be included in an amount of 60 parts by weight or more based on 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less based on 100 parts by weight of the negative electrode active material layer composition.

The negative electrode active material layer composition according to the present application uses the specific negative electrode conductive material and negative electrode binder capable of controlling the volume expansion rate during charging and discharging even when the silicon-based active material having a significantly high capacity is used within the above range. Accordingly, even when the silicon-based active material is within the above range, the negative electrode active material layer composition does not degrade the performance of the negative electrode and has excellent output characteristics in charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity is determined by Equation 1 below, in which A is an area and P is a boundary line.

[Formula 1]

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Therefore, in an exemplary embodiment of the present application, the negative electrode active material layer composition may include a negative electrode conductive material and a negative electrode binder. That is, the negative electrode conductive material plays a role in securing a conductive path, and the binder plays a role in holding the negative electrode conductive material during charging and discharging.

In an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a conductive material that may be used for improving conductivity of the negative electrode, forms conductivity without causing a chemical change and has a circular or point shape. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In an exemplary embodiment of the present application, a particle diameter of the point-like conductive material may be 10 nm to 100 nm, preferably 20 nm to 90 nm, and more preferably 40 nm to 60 nm.

In an exemplary embodiment of the present application, the conductive material may include a planar conductive material.

The planar conductive material refers to a conductive material that improves conductivity by increasing surface contact between silicon particles in the negative electrode and at the same time serves to suppress disconnection of the conductive path due to the volume expansion. The planar conductive material may be expressed as a plate-like conductive material or a bulk-type conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, an average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 $\mu$m or greater and 1.5 $\mu$m or less, D50 of 4.0 $\mu$m or greater and 5.0 $\mu$m or less, and D90 of 7.0 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected by dispersion to some extent in the electrode performance, so that a planar conductive material with a low specific surface area that does not cause a problem in dispersion is used particularly preferably.

In an exemplary embodiment of the present application, the planar conductive material may have a BET specific surface area of 1 $m^2$/g or greater.

In another exemplary embodiment, the planar conductive material may have a BET specific surface area of 1 $m^2$/g or greater and 500 $m^2$/g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 250 $m^2$/g or less.

In another exemplary embodiment, the planar conductive material is a planar conductive material with a low specific surface area, and the BET specific surface area may satisfy a range of 1 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term "bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may include a linear conductive material and the linear conductive material may be carbon nanotubes.

In an exemplary embodiment of the present application, the carbon nanotubes may be SWCNT or/and MWCNT. When the linear conductive material is SWCNT, a length of the SWCNT may be 0.5 $\mu$m to 100 $\mu$m, and preferably 1 $\mu$m to 80 $\mu$m.

In an exemplary embodiment of the present application, the negative electrode conductive material may be included in an amount of 5 parts by weight or more and 40 parts by weight or less based on 100 parts by weight of the negative electrode active material layer composition.

In another exemplary embodiment, the negative electrode conductive material may be included in an amount of 5 parts by weight or more and 40 parts by weight or less, preferably 5 parts by weight or more and 30 parts by weight or less, and more preferably 5 parts by weight or more and 25 parts by weight or less based on 100 parts by weight of the negative electrode active material layer composition.

In an exemplary embodiment of the present application, the negative electrode conductive material may include a planar conductive material and a linear conductive material, and a ratio of the planar conductive material to the linear conductive material may satisfy 1:0.001 to 1:0.3.

In an exemplary embodiment of the present application, as the negative electrode conductive material includes the planar conductive material and the linear conductive material and the composition and ratio described above are satisfied, respectively, the life characteristics of an existing lithium secondary battery are not significantly affected, and the number of points where the battery can be charged and discharged increases, so that output characteristics are excellent at a high C-rate.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the plate-like conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the plate-like conductive material that is used as the negative electrode conductive material is a material having a plane or plate-like shape, and may be expressed as plate-like graphite. That is, the plate-like conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the silicon-based active material and the negative electrode conductive material in order to prevent distortion and structural deformation of the negative electrode structure when the volume of the silicon-based active material expands and relaxes. When such roles are satisfied, all of the general negative electrode binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, more preferably 20 parts by weight or less, and 5 parts by weight or more, and 8 parts by weight or more based on 100 parts by weight of the negative electrode active material layer composition.

Compared to existing carbon-based negative electrodes, when a Si-based negative electrode is used, an aqueous binder is applied in parts by weight described above, allowing the use of a point-like conductive material with a low functional group content. In addition, the above characteristics allows the point-like conductive material to have hydrophobicity and the excellent bond strength between the conductive material/binder.

In an exemplary embodiment of the present application, the silicon-based negative electrode may be formed by coating a negative electrode slurry including the negative electrode active material layer composition on one surface or both surfaces of the negative electrode current collector layer.

In an exemplary embodiment of the present application, the negative electrode slurry may include a negative electrode active material layer composition and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition based on 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

In an exemplary embodiment of the present application, the slurry solvent may be used without limitation as long as it can disperse the negative electrode composition described above, and specifically, water or NMP may be used.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, the conductive material, and the binder included in the negative electrode active material layer, and in particular, satisfies the range described above when the silicon-based active material and the conductive material are included in the specific compositions and contents according to the present application, so that the electrode has electric conductivity and resistance within appropriate ranges.

In an exemplary embodiment of the present application, the positive electrode includes a positive electrode current collector layer and a positive electrode active material layer including a positive electrode active material layer composition provided on one surface or both surfaces of the positive electrode current collector layer.

In an exemplary embodiment of the present application, the positive electrode active material layer may include a positive electrode active material layer composition, and the positive electrode active material layer composition may include one or more selected from the group consisting of a positive electrode active material, a positive electrode conductive material, and a positive electrode binder.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 1 to 500 μm, and a surface of the positive electrode current collector layer may be formed with microscopic irregularities to enhance adhesive force with the positive electrode active material. For example, the positive electrode current collector may be used in various forms such as a film, a sheet, a foil, a net, a porous body, a foamed body, and a non-woven fabric body.

In an exemplary embodiment of the present application, there is provided the lithium secondary battery in which the positive electrode and negative electrode current collector layers each have a thickness of 1 μm or greater and 100 μm or less and the positive electrode and negative electrode active material layers each have a thickness of 20 μm or greater and 500 μm or less.

In an exemplary embodiment of the present application, there is provided the lithium secondary battery in which the positive electrode active material layer composition includes a positive electrode active material, the positive electrode active material includes one or more selected from the group consisting of a large-particle diameter positive electrode active material having a central particle diameter (D50) of 9 μm or greater and a small-particle diameter positive electrode active material having a central particle diameter (D50) of 10 μm or less, and the large-particle diameter positive electrode active material is included in an amount of 45 parts by weight or more and 100 parts by weight or less based on 100 parts by weight of the positive electrode active material.

In another exemplary embodiment, the positive electrode active material may include one or more selected from the group consisting of a large-particle diameter positive electrode active material having a central particle diameter (D50) of 10 $\mu$m or greater and a small-particle diameter positive electrode active material having a central particle diameter (D50) of 10 $\mu$m or less, and the large-particle diameter positive electrode active material may be included in an amount of 45 parts by weight or more and 100 parts by weight or less, preferably 46 parts by weight or more and 100 parts by weight or less, and more preferably 48 parts by weight or more and 100 parts by weight or less based on 100 parts by weight of the positive electrode active material.

In this case, the description 'the large-particle diameter positive electrode active material is included in an amount of 100 parts by weight' may mean that the positive electrode active material consists of only the large-particle diameter positive electrode active material.

In an exemplary embodiment of the present application, there is provided the lithium secondary battery in which the positive electrode active material includes a large-particle diameter positive electrode active material and a small-particle diameter positive electrode active material, and in which an average particle diameter (D50) of the large-particle diameter positive electrode active material is 9 $\mu$m or greater and 15 $\mu$m or less and an average particle diameter (D50) of the small-particle diameter positive electrode active material is 3 $\mu$m or greater and 6 $\mu$m or less.

In an exemplary embodiment of the present application, there is provided the lithium secondary battery in which the initial efficiency of the positive electrode is 90% or less. More specifically, the initial efficiency of the positive electrode may satisfy 80% or higher, and more specifically 85% or higher.

As described above, when the large-particle diameter positive electrode active material is included within the above range, the initial efficiency of the positive electrode described above can be implemented. That is, by maintaining the initial efficiency of the positive electrode to be lower than the initial efficiency of the negative electrode, a section accompanied by a rapid change in volume of silicon during discharging is not used, so cycle performance can be improved.

In an exemplary embodiment of the present application, the central particle diameter (D50) of the large-particle diameter positive electrode active material may satisfy a range of 9 $\mu$m or greater or 9.3 $\mu$m or greater and 20 $\mu$m or less, and preferably 13 $\mu$m or less.

In an exemplary embodiment of the present application, the central particle diameter (D50) of the small-particle active material may satisfy a range of 10 $\mu$m or less, 8 $\mu$m or less, specifically 7 $\mu$m or less, and more specifically 6 $\mu$m or less and 1 $\mu$m or greater, and preferably 3 $\mu$m or greater.

In the end, according to the present invention, the initial efficiency of the positive electrode is adjusted by adjusting the part by weight of the large-particle diameter positive electrode active material as described above, and accordingly, as described above, the area ratio, full width, and full length of the positive electrode and the negative electrode are adjusted to create asymmetrical dimensional differences, so that the main objects of the present invention, that is, advantages when using a silicon-based negative electrode can be obtained, and at the same time problems related to life characteristics can be addressed.

The positive electrode active material may be a positive electrode active material that is typically used. Specifically, the positive electrode active material may include one or more selected from the group consisting of $LiNi_xCo_yMn_zO_2$ (x+y+z=1); $LiNi_aCo_bMn_cAl_dO_2$ (a+b+c+d=1); $LiMn_2O_4$; $LiNi_{0.5}Mn_{1.5}O_2$; and $LiM_xFe_yPO_4$ (M: transition metal, x+y=1). transition metal, x + y = 1). In this case, the positive electrode active material is not limited thereto.

In an exemplary embodiment of the present application, there is provided the lithium secondary battery in which the positive electrode active material is a nickel-cobalt-manganese (NCM) oxide, or a nickel-cobalt-manganese-aluminum (NCMA) oxide, and nickel included in the nickel-cobalt-manganese (NCM) oxide and nickel-cobalt-manganese-aluminum (NCMA) oxide is included in an amount of 50 mol% or more in all metals except lithium.

In another exemplary embodiment, the positive electrode active material may be nickel-cobalt-manganese (NCM) oxide, or nickel-cobalt-manganese-aluminum (NCMA) oxide, and nickel included in the nickel-cobalt-manganese (NCM) oxide and nickel-cobalt-manganese-aluminum (NCMA) oxide may be included in an amount of 50 mol% or more, preferably 55 mol% or more, more preferably 60 mol% or, and most preferably 65 mol% or more in all metals except lithium. In addition, the content of nickel (Ni) may be 95 mol% or less, or 90 mol% or less based on all metals.

When the content of nickel is less than the above range, a content of cobalt increases to increase thermal stability. However, the capacity of the positive electrode active material is reduced, thereby causing a problem in that the positive electrode active material cannot be applied to an electrochemical device requiring a high capacity.

On the other hand, as the content of nickel is higher within the above range, the lithium secondary battery including the same may exhibit higher capacity characteristics. However, as the content of nickel increases, the content of cobalt and/or manganese relatively decreases, and accordingly, thermal stability may be lowered. Therefore, the efficiency of the lithium secondary battery according to the present application may be maximized when the content of nickel is within the above range.

In an exemplary embodiment of the present application, the nickel-cobalt-manganese (NCM) oxide may be represented as lithium nickel-cobalt-manganese oxide as follows, and lithium nickel-cobalt-manganese (NCM) oxide is a Ni-Co-Mn 3-component system positive electrode active material represented by $Li_{1+x}(Ni_aCo_bMn_c)O_2$ ($0.97 \leq x \leq 1.06$, $0<a<1$, $0<b<1$, $0<c<1$, a+b+c=1), a Ni-Co-Mn 3-component system positive electrode active material represented by $Li_{1+x}(Ni_aCo_bMn_c)O_4$ ($0.97 \leq x \leq 1.06$, $0<a<2$, $0<b<2$, $0<c<2$, a+b+c=2) or a mixture thereof, and is a composite body made to combine advantages such as high capacity of a nickel-containing oxide, thermal stability of a manganese-containing oxide and excellent electrochemical characteristics of a cobalt-containing oxide. The lithium nickel-cobalt-manganese (NCM) oxide may be doped with a small amount of a metal element to the extent that satisfies the purpose of the present invention. For example, each of the lithium nickel-cobalt-manganese (NCM) oxide represented by a Ni-Co-Mn 3-component system positive electrode active material represented by $Li_{1+x}(Ni_aCo_bMn_c)O_2$ ($0.97 \leq x \leq 1.06$, $0<a<1$, $0<b<1$, $0<c<1$, a+b+c=1) or $Li_{1+x}(Ni_aCo_bMn_c)O_4$ ($0.97 \leq x \leq 1.06$, $0<a<2$, $0<b<2$, $0<c<2$, a+b+c=2) may be independently doped with one or two or more metals selected from the group consisting of Na, K, Mg, Ca, Sr, Ni, Co, Ti, Al, Si, Sn, Mn, Cr, Fe, V and Zr, as a non-limiting example.

The amount of the metal doped into the lithium nickel-cobalt-manganese (NCM) may be within a range that does not significantly increase positive electrode resistance. For example, the doping metal in lithium nickel-cobalt-manganese (NCM) oxide may be within a range of 10 to 1500 ppm, 50 to 1000 ppm, or 100 to 500 ppm based on each element, but is not limited thereto. As a non-limiting example, lithium nickel-cobalt-manganese (NCM) oxide generally uses 2 to 3 elements as the doping metals, and the doping metals may be present in an amount of hundreds of ppm based on each element.

In an exemplary embodiment of the present application, the content of nickel included in the nickel-cobalt-manganese (NCM) oxide may be 80 mol% or more, specifically 85 mol% or more, more specifically 88 mol% or more, and further specifically 93 mol% or more in all metals except lithium.

In the Formula represented by $Li_{1+x}(Ni_aCo_bMn_c)O_2$ ($0.97 \leq x \leq 1.06$, $0<a<1$, $0<b<1$, $0<c<1$, a+b+c=1), the content of nickel may mean a ratio of a included. That is, in the case of a 3-component system, it may mean a ratio of nickel among metals of nickel, cobalt, and manganese.

In an exemplary embodiment of the present application, the nickel-cobalt-manganese-aluminum (NCMA) oxide may be represented as lithium nickel-cobalt-manganese-aluminum oxide as follows, and lithium nickel-cobalt-manganese-aluminum (NCMA) oxide is a Ni-Co-Mn-Al 4-component system positive electrode active material represented by $Li_{1+x}(Ni_aCo_bMn_cAl_d)O_2$ ($0.97 \leq x \leq 1.06$, $0<a<1$, $0<b<1$, $0<c<1$, $0<d<1$ a+b+c+d=1), a Ni-Co-Mn-Al 4-component system positive electrode active material represented by $Li_{1+x}(Ni_aCo_bMn_cAl_d)O_4$ ($0.97 \leq x \leq 1.06$, $0<a<2$, $0<b<2$, $0<c<2$, $0<d<2$ a+b+c+d=2) or a mixture thereof, and is a composite body made to combine advantages such as high capacity of a nickel-containing oxide, thermal stability of a manganese-containing oxide and excellent electrochemical characteristics of a cobalt-containing oxide. The lithium nickel-cobalt-manganese-aluminum (NCMA) oxide may be doped with a small amount of a metal element to the extent that satisfies the purpose of the present invention.

For example, each of the lithium nickel-cobalt-manganese (NCM) represented by Ni-Co-Mn-Al 4-component system positive electrode active material represented by $Li_{1+x}(Ni_aCo_bMn_cAl_d)O_2$ ($0.97 \leq x \leq 1.06$, $0<a<1$, $0<b<1$, $0<c<1$, $0<d<1$ a+b+c+d=1) or $Li_{1+x}(Ni_aCo_bMn_cAl_d)O_4$ ($0.97 \leq x \leq 1.06$, $0<a<2$, $0<b<2$, $0<c<2$, $0<d<2$ a+b+c+d=2) may be independently doped with one or two or more metals selected from the group consisting of Na, K, Mg, Ca, Sr, Ni, Co, Ti, Al, Si, Sn, Mn, Cr, Fe, V and Zr, as a non-limiting example.

In an exemplary embodiment of the present application, the content of nickel included in the nickel-cobalt-manganese-aluminum (NCMA) oxide may be 80 mol% or more, specifically 85 mol% or more, more specifically 88 mol% or more, and further specifically 93 mol% or more in all metals except lithium.

In the Formula represented by $Li_{1+x}(Ni_aCo_bMn_cAl_d)O_2$ ($0.97 \leq x \leq 1.06$, $0<a<1$, $0<b<1$, $0<c<1$, $0<d<1$ a+b+c+d=1), the content of nickel may mean a ratio of a included. That is, in the case of a 4-component system, the content of nickel may mean a ratio of nickel among metals of nickel, cobalt, manganese, and aluminum.

In an exemplary embodiment of the present application, the average particle diameter (D50) of the positive electrode active material may be 5 $\mu$m to 20 $\mu$m, and preferably 6 $\mu$m to 15 $\mu$m. That is, since the positive electrode active material includes a large-particle diameter positive electrode active material, the overall average particle diameter can satisfy the above range.

In an exemplary embodiment of the present application, there is provided the lithium secondary battery in which the single-particle positive electrode active material is included in an amount of 90 parts by weight or more based on 100 parts by weight of the positive electrode active material layer composition.

In another exemplary embodiment, the single-particle positive electrode active material may be included in an amount of 90 parts by weight or more, preferably 93 parts by weight or more, and more preferably 95 parts or more, and 99 parts by weight or less or 98 parts by weight or less based on 100 parts by weight of the positive electrode active material layer composition.

The positive electrode active material layer may include a positive electrode conductive material and a positive electrode binder together with the single-particle positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in one embodiment of the present application, there is provided the lithium secondary battery in which the positive electrode conductive material includes a single-walled carbon nanotube (SWCNT), or a multi-walled carbon nanotube (MWCNT), and is included in an amount of 0.1 part by weight or more and 2 parts by weight or less based on 100 parts by weight of the positive electrode active material layer composition.

In another exemplary embodiment, the positive electrode conductive material may be included in an amount of 0.1 part by weight or more and 2 parts by weight or less, preferably 0.3 part by weight or more and 1.5 parts by weight or less, and more preferably 0.5 part by weight or more and 1.2 parts by weight or less based on 100 parts by weight of the positive electrode active material layer composition.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

In this case, the positive electrode binder may be included in an amount of 0.1 part by weight or more and 10 parts by weight or less, and preferably 1 part by weight or more and 5 parts by weight or less, on the basis of 100 parts by weight of the positive electrode composition.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

In the present application, examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**(1) Preparation of Positive Electrode**

As the positive electrode active material, positive electrode active materials having the characteristics shown in Table 1 below were used.

[Table 1]

| | | Large-particle diameter positive electrode active material | Small-particle diameter positive electrode active material |
|---|---|---|---|
| | Preparation Example 1 | large-particle diameter positive electrode active material A, 50 parts by weight | small-particle diameter positive electrode active material A, 50 parts by weight |
| | Preparation Example 2 | large-particle diameter positive electrode active material A, 80 parts by weight | small-particle diameter positive electrode active material A, 20 parts by weight |
| | Preparation Example 3 | large-particle diameter positive electrode active material B, 100 parts by weight | - |
| | Preparation Example 4 | large-particle diameter positive electrode active material A, 20 parts by weight | small-particle diameter positive electrode active material A, 80 parts by weight |

In Table 1 above, each part by weight corresponds to a part by weight based on 100 parts by weight of the entire positive electrode active material.

In Table 1 above, the large-particle diameter positive electrode active material A is $Li(Ni_aCo_bMn_c)O_2$ in which NCM excluding lithium (Li) and oxygen ($O_2$) of the single-particle positive electrode active material satisfied the ratio of Ni:Co:Mn=93:5:2 (a:b:c=0.93:0.05:0.02) and the central particle diameter (D50) was 11 $\mu$m.

In Table 1 above, the small-particle diameter positive electrode active material A is $Li(Ni_aCo_bMn_c)O_2$ in which NCM excluding lithium (Li) and oxygen ($O_2$) of the single-particle positive electrode active material satisfied the ratio of Ni:Co:Mn=93:5:2 (a:b:c=0.93:0.05:0.02) and the central particle diameter (D50) was 4 $\mu$m.

In Table 1 above, the large-particle diameter positive electrode active material A is $Li(Ni_aCo_bMn_c)O_2$ in which NCM excluding lithium (Li) and oxygen ($O_2$) of the single-particle positive electrode active material satisfied the ratio of Ni:Co:Mn=93:5:2 (a:b:c=0.93:0.05:0.02) and the central particle size (D50) was 11 $\mu$m, and corresponds to a single-particle active material in which a primary particle is a lump of one particle.

The positive electrode active material, the positive electrode conductive material (LB. CNT), and the binder (PVdF, KF9700) were added to a solvent (N-methylpyrrolidone, NMP) at a weight ratio of 97.96:0.8:1.24 to prepare a positive electrode slurry. The positive electrode slurry was applied to an aluminum (Al) thin film having a thickness of 25 $\mu$m, which was a positive electrode current collector, dried, and then roll-pressed to prepare a positive electrode.

**(2) Preparation of Negative Electrode**

A negative electrode active material layer composition was prepared using Si (average particle diameter (D50): 5

μm) as a silicon-based active material, a first conductive material, a second conductive material, and polyacrylamide as a binder at a weight ratio of 80:9.6:0.4:10. A negative electrode slurry (solid concentration: 28 wt%) was prepared by adding the composition to distilled water as a solvent for formation of a negative electrode slurry.

The first conductive material was plate-like graphite (specific surface area: 17 $m^2/g$, average particle diameter (D50): 3.5 μm), and the second conductive material was carbon nanotubes.

As a mixing method, the first conductive material, the second conductive material, the binder and water were dispersed at 2500 rpm for 30 minutes by using a homo mixer, the active material was added thereto, and the resultant mixture was dispersed at 2500 rpm for 30 minutes to fabricate a slurry.

The negative electrode slurry was coated on both surfaces of a copper current collector (thickness: 15 μm) serving as a negative electrode current collector with a loading amount of 3.00 mg/ $cm^2$, which was then roll-pressed and dried in a vacuum oven at 130°C for 10 hours to form a negative electrode active material layer (thickness: 23 μm).

**(3) Preparation of Secondary Battery**

An electrode assembly was prepared by interposing a compression-resistant thin film separator (PE 12 um) with ceramic coating 3 um/3 um between the positive electrode and the negative electrode. After placing the electrode assembly inside a case, an electrolyte was injected into the case to prepare a lithium secondary battery having characteristics shown in Table 2 below.

[Table 2]

| | Positive electrode | Initial efficiency of silicon-based negative electrode - initial efficiency (%) of positive electrode | Area of positive electrode active material layer: area of negative electrode active material layer | Full width of negative electrode - full width of positive electrode | Full length of negative electrode - full length of positive electrode |
|---|---|---|---|---|---|
| Example 1 | Positive electrode of Preparation Example 1 | 0.3% | 1:1.05 | 2 mm | 3 mm |
| Example 2 | Positive electrode of Preparation Example 2 | 1.5% | 1:1.05 | 2 mm | 3 mm |
| Example 3 | Positive electrode of Preparation Example 3 | 3.3% | 1: 1. 05 | 2 mm | 3 mm |
| Comparative Example 1 | Positive electrode of Preparation Example 4 | 0.1% | 1:1.05 | 2 mm | 3 mm |
| Comparative Example 2 | Positive electrode of Preparation Example 1 | 0.3% | 1:1 | 0 mm | 0 mm |
| Comparative Example 3 | Positive electrode of Preparation Example 1 | 0.3% | 1: 1. 2 | 3 mm | 5 mm |
| Comparative Example 4 | Positive electrode of Preparation Example 3 | 5% | 1: 1. 05 | 2 mm | 3 mm |

(continued)

| | Positive electrode | Initial efficiency of silicon-based negative electrode - initial efficiency (%) of positive electrode | Area of positive electrode active material layer: area of negative electrode active material layer | Full width of negative electrode - full width of positive electrode | Full length of negative electrode - full length of positive electrode |
|---|---|---|---|---|---|
| Comparative Example 5 | Positive electrode of Preparation Example 1 | 0.3% | 1:1.05 | 2 mm | 2 mm |

### Experimental Example 1: Calculation of Energy Density

For the lithium secondary batteries prepared in Example 3 and Comparative Examples 3 and 4, the energy density of medium-to-large cells of 40 stacks of was calculated assuming the sizes of the negative electrode and the positive electrode in the corresponding conditions for a cell size of $102 \times 548$, and the results are shown in Table 3 below. The feasibility of design to satisfy 800 Wh/L as a high energy density Si cell design standard is indicated by O and X.

[Table 3]

| | Energy density | Feasibility of 800 Wh/L design |
|---|---|---|
| Example 3 | 831 | ○ |
| Comparative Example 3 | 708 | X |
| Comparative Example 4 | 798 | X |

### Experimental Example 2: Evaluation of Pouch Cell Life

For the lithium secondary batteries prepared in the Examples 1 to 3 and Comparative Examples 1, 2, and 5, the life and capacity retention rate were evaluated using an electrochemical charging and discharging device. The in-situ cycle test was conducted on the secondary battery at 4.2-3.2 V 4 C/1 C, and during the test, 1 C/1 C charging/discharging (4.2-3.2 V) was performed every 50 cycles to measure the capacity retention rate, and results thereof are listed in Table 4.

life retention rate (%)={ (discharge capacity in the Nth cycle)/(discharge capacity in the first cycle)}$\times$100

After completion of the evaluation, the cell was disassembled to check whether Li-plating occurred on the tab or electrode side, and the results are shown in Table 4 below.

[Table 4]

| | Capa. retention @500th 1C/1C cycle, 4.2-3.2V | Li-plating or not |
|---|---|---|
| Example 1 | 80.1 | X |
| Example 2 | 81.2 | X |
| Example 3 | 81.9 | X |
| Comparative Example 1 | 79.7 | X |
| Comparative Example 2 | 67.9 | ○ |
| Comparative Example 5 | 80.0 | ○ |

As can be seen in Experimental Examples 1 and 2 above, it could be confirmed that the lithium secondary battery according to the present application can enable a battery with high capacity and high energy density to be ensured by using the silicon-based negative electrode, and in particular can adjust the initial efficiency between the positive electrode and the negative electrode and the differences in area, full width, and full length between the positive electrode and the negative electrode so that a section accompanied by a rapid change in volume of the silicon-based negative electrode during discharging is not used, thereby improving the cycle performance of the lithium secondary battery.

That is, it could be confirmed that by adjusting the conditions described above, a rapid volume change section of the silicon-based active material is limited to minimize the breakage of pure Si particles, and additional electrolyte solution decomposition is controlled to maintain reversible Li loss and a conductive network between Si active materials to control an amount of isolated lithium, resulting in improvement in cycle performance.

As can be seen in Table 3, it could be confirmed that the energy density of the lithium secondary battery of Example 3 according to the present application was formed at a high level compared to Comparative Examples 3 and 4.

As can be seen in Table 4, it could be confirmed that the life performance of the lithium secondary batteries of Examples 1 to 3 according to the present application was higher than those of Comparative Examples 1 and 2. Additionally, in the case of Comparative Example 5 in which the values of the full widths and full lengths of the negative electrode and the positive electrode were different from those of the present application, the life performance was similar to those of the Examples, but the decomposition caused Li-plating on the tab or electrode side, resulting in a problem in the operation of the lithium secondary battery.

## Claims

1. A lithium secondary battery comprising:

    a positive electrode;
    a silicon-based negative electrode;
    a separator provided between the positive electrode and the negative electrode; and
    an electrolyte,
    wherein the positive electrode comprises a positive electrode current collector layer and a positive electrode active material layer comprising a positive electrode active material layer composition provided on one surface or both surfaces of the positive electrode current collector layer,
    wherein the silicon-based negative electrode comprises a negative electrode current collector layer and a negative electrode active material layer comprising a negative electrode active material layer composition provided on one surface or both surfaces of the negative electrode current collector layer,
    wherein the negative electrode active material layer composition comprises a silicon-based active material, and the silicon-based active material comprises one or more selected from the group consisting of $SiO_x$ (x=0), $SiO_x$ (0<x<2), SiC, and a Si alloy,
    wherein an initial efficiency of the silicon-based negative electrode is higher than that of the positive electrode by 0.2% or higher and 4% or less,
    wherein an area ratio of the positive electrode active material layer and the negative electrode active material layer satisfies a range of 1:1.02 to 1:1.1, and
    wherein the silicon-based negative electrode exhibits an asymmetrical dimensional difference in which a full width of the silicon-based negative electrode is greater than a full width of the positive electrode by 1 mm or more and a full length of the silicon-based negative electrode is greater than a full length of the positive electrode by 2.5 mm or more.

2. The lithium secondary battery of claim 1, wherein the silicon-based active material comprises one or more selected from the group consisting of $SiO_x$ (x=0), $SiO_x$ (0<x<2), and a metal impurity, and comprises 70 parts by weight or more of $SiO_x$ (x=0) based on 100 parts by weight of the silicon-based active material.

3. The lithium secondary battery of claim 1, wherein the silicon-based active material is included in an amount of 60 parts by weight or more based on 100 parts by weight of the negative electrode active material layer composition.

4. The lithium secondary battery of claim 1, wherein the positive electrode active material layer composition comprises a positive electrode active material,

    wherein the positive electrode active material comprises one or more selected from the group consisting of a large-particle diameter positive electrode active material having a central particle diameter (D50) of 9 μm or greater and a small-particle diameter positive electrode active material having a central particle diameter (D50) of 10 μm or less, and
    wherein the large-particle diameter positive electrode active material is included in an amount of 45 parts by weight or more and 100 parts by weight or less based on 100 parts by weight of the positive electrode active material.

5. The lithium secondary battery of claim 1, wherein the initial efficiency of the positive electrode is 90% or less.

6. The lithium secondary battery of claim 1, wherein the positive electrode active material comprises one or more selected from the group consisting of $LiNi_xCo_yMn_zO_2$ (x+y+z=1), $LiNi_aCo_bMn_cAl_dO_2$(a+b+c+d=1) , $LiMn_2O_4$, $LiNi_{0.5}Mn_{1.5}O_2$, and $LiM_xFe_yPO_4$ (M: transition metal, x+y=1).

7. The lithium secondary battery of claim 4, wherein the positive electrode active material is a nickel-cobalt-manganese (NCM) oxide, or a nickel-cobalt-manganese-aluminum (NCMA) oxide, and
   wherein nickel included in the nickel-cobalt-manganese (NCM) oxide and nickel-cobalt-manganese-aluminum (NCMA) oxide is included in an amount of 50 mol% or more in all metals except lithium.

8. The lithium secondary battery of claim 4, wherein the positive electrode active material comprises a large-particle diameter positive electrode active material and a small-particle diameter positive electrode active material,

   wherein an average particle diameter (D50) of the large-particle diameter positive electrode active material is 9 μm or greater and 15 μm or less, and
   wherein an average particle diameter (D50) of the small-particle diameter positive electrode active material is 3 μm or greater and 6 μm or less.

9. The lithium secondary battery of claim 4, wherein an average particle diameter (D50) of the positive electrode active material is 5 μm or greater and 20 μm or less.

10. The lithium secondary battery of claim 4, wherein the positive electrode active material is included in an amount of 90 parts by weight or more based on 100 parts by weight of the positive electrode active material layer composition.

11. The lithium secondary battery of claim 1, wherein thicknesses of the positive electrode and negative electrode current collector layers are 1 μm or greater and 100 μm or less, and
    wherein thicknesses of the positive electrode and negative electrode active material layers are 20 μm or greater and 500 μm or less.

[Figure 1]

## INTERNATIONAL SEARCH REPORT

| International application No. |
|---|
| **PCT/KR2023/021385** |

| A. | CLASSIFICATION OF SUBJECT MATTER |
|---|---|

**H01M 4/134**(2010.01)i; **H01M 4/38**(2006.01)i; **H01M 4/48**(2010.01)i; **H01M 4/587**(2010.01)i; **H01M 4/36**(2006.01)i; **H01M 4/525**(2010.01)i; **H01M 4/505**(2010.01)i; **H01M 4/58**(2010.01)i; **H01M 4/131**(2010.01)i; **H01M 4/133**(2010.01)i

According to International Patent Classification (IPC) or to both national classification and IPC

| B. | FIELDS SEARCHED |
|---|---|

Minimum documentation searched (classification system followed by classification symbols)

H01M 4/134(2010.01); H01M 10/04(2006.01); H01M 10/052(2010.01); H01M 10/0562(2010.01); H01M 10/0585(2010.01); H01M 10/42(2006.01); H01M 4/36(2006.01); H01M 4/38(2006.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 활물질(active material), 실리콘(silicon), 면적(area), 길이(length), 폭(width), 입경(particle diameter)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0160140 A (LG ENERGY SOLUTION, LTD.) 06 December 2022 (2022-12-06)<br>See claims 1, 9 and 11; and paragraphs [0071], [0087], [0090], [0097], [0101], [0128]-[0129] and [0131]. | 1-11 |
| Y | KR 10-0243830 B1 (CANON KABUSHIKI KAISHA) 01 February 2000 (2000-02-01)<br>See claims 1 and 4; and paragraph [0200]. | 1-11 |
| Y | KR 10-2019-0058367 A (LG CHEM, LTD.) 29 May 2019 (2019-05-29)<br>See claims 1-4; and paragraph [0138]. | 4,6-10 |
| A | JP 2015-153663 A (TOYOTA MOTOR CORP.) 24 August 2015 (2015-08-24)<br>See entire document. | 1-11 |
| A | JP 2016-058236 A (HITACHI LTD.) 21 April 2016 (2016-04-21)<br>See entire document. | 1-11 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 April 2024** | **15 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/021385**

| Patent document cited in search report | | | Publication date (day/month/year) | Patent family member(s) | | | Publication date (day/month/year) |
|---|---|---|---|---|---|---|---|
| KR | 10-2022-0160140 | A | 06 December 2022 | CN | 115989609 | A | 18 April 2023 |
| | | | | EP | 4191730 | A1 | 07 June 2023 |
| | | | | JP | 2023-541806 | A | 04 October 2023 |
| | | | | US | 2023-0343948 | A1 | 26 October 2023 |
| | | | | WO | 2022-250325 | A1 | 01 December 2022 |
| KR | 10-0243830 | B1 | 01 February 2000 | CA | 2150507 | A1 | 01 December 1995 |
| | | | | CA | 2150507 | C | 18 May 1999 |
| | | | | DE | 69511483 | D1 | 23 September 1999 |
| | | | | DE | 69511483 | T2 | 16 March 2000 |
| | | | | EP | 0690520 | A1 | 03 January 1996 |
| | | | | EP | 0690520 | B1 | 18 August 1999 |
| | | | | ES | 2135012 | T3 | 16 October 1999 |
| | | | | JP | 08-050917 | A | 20 February 1996 |
| | | | | JP | 3287732 | B2 | 04 June 2002 |
| | | | | KR | 10-1995-0034974 | A | 28 December 1995 |
| | | | | US | 2002-0064710 | A1 | 30 May 2002 |
| | | | | US | 6596432 | B2 | 22 July 2003 |
| KR | 10-2019-0058367 | A | 29 May 2019 | CN | 111316480 | A | 19 June 2020 |
| | | | | CN | 111316480 | B | 20 September 2022 |
| | | | | EP | 3696894 | A1 | 19 August 2020 |
| | | | | EP | 3696894 | A4 | 16 December 2020 |
| | | | | EP | 3696894 | B1 | 13 September 2023 |
| | | | | HU | E063192 | T2 | 28 December 2023 |
| | | | | JP | 2021-501982 | A | 21 January 2021 |
| | | | | JP | 7066223 | B2 | 13 May 2022 |
| | | | | KR | 10-2021-0053862 | A | 12 May 2021 |
| | | | | KR | 10-2354281 | B1 | 21 January 2022 |
| | | | | US | 11799081 | B2 | 24 October 2023 |
| | | | | US | 2020-0335783 | A1 | 22 October 2020 |
| | | | | WO | 2019-103463 | A1 | 31 May 2019 |
| JP | 2015-153663 | A | 24 August 2015 | JP | 6206237 | B2 | 04 October 2017 |
| JP | 2016-058236 | A | 21 April 2016 | CN | 105406084 | A | 16 March 2016 |
| | | | | JP | 6348807 | B2 | 27 June 2018 |
| | | | | US | 2016-0072125 | A1 | 10 March 2016 |
| | | | | US | 9614221 | B2 | 04 April 2017 |

Form PCT/ISA/210 (patent family annex) (July 2022)

**REFERENCES CITED IN THE DESCRIPTION**

**Patent documents cited in the description**

- KR 1020220186045

- JP 2009080971 A